# EUROPEAN PATENT SPECIFICATION

(11) **EP 3 924 423 B1**
(45) Date of publication and mention of the grant of the patent: **11.02.2026**
(21) Application number: 20755884.2
(22) Date of filing: 12.02.2020
(51) Int. Cl.: C08L 53/00, C08L 25/06, C08L 91/00, C08J 3/075, C08J 3/21

(54) **THERMOPLASTIC GEL WITH LOW OIL BLEED OUT**
THERMOPLASTISCHES GEL MIT NIEDRIGEM ÖLAUSLAUF
GEL THERMOPLASTIQUE À FAIBLE EXSUDATION D'HUILE

(30) Priority: 12.02.2019 US 201962804289 P
(43) Date of publication of application: 22.12.2021
(73) Proprietor: CommScope Technologies LLC, Hickory, NC 28602 (US)
(72) Inventor: ADAMS, Gary William, Hickory, North Carolina 28602 (US); RADELET, Christiaan, Hickory, North Carolina 28602 (US); DELA RUELLE, Marie-Christine Alma Pauline Lucien, Hickory, North Carolina 28602 (US)
(74) Representative: Murgitroyd & Company
(86) International application number: PCT/US2020/017906
(87) International publication number: WO 2020/167930

(56) References cited:
- EP-A1- 2 632 983
- WO-A1-93/05113
- JP-A- 2002 256 132
- US-A1- 2002 103 545
- US-A1- 2004 225 044
- US-A1- 2009 186 958
- US-A1- 2014 041 893
- US-A1- 2016 347 914

## Description

### CROSS-REFERENCE TO RELATED APPLICATION

This application is being filed on February 12, 2020 as a PCT International Patent Application and claims the benefit of U.S. Patent Application Serial No. 62/804,289, filed on February 12, 2019.

### TECHNICAL FIELD

The present disclosure relates generally to thermoplastic gels with low oil bleed out. The thermoplastic gels may be used to seal a closure, enclosure or interconnect system, for example, in a fiber optic closure, electrical sealant, or electrical closure.

### BACKGROUND

Oil bleed out may be an issue for thermoplastic gels made with an oil extender especially in the context of enclosures where the gel is used as a sealant on cables entering and exiting the enclosure. Oil bleed out is dependent the composition of the gel and the amount of pressure exerted on the gel by the enclosure (e.g., by a spring force).

For applications where elevated gel pressure is required, there is a need for new thermoplastic gel formulations exhibiting less or no oil bleed out. US 2016/0347914 A1 describes methods and compositions for making thermoplastic gels including styrenic block copolymers and softener oils.

### SUMMARY

The invention is defined in any independent claims. The present disclosure provides a thermoplastic gel prepared from a composition comprising a styrene triblock copolymer; a styrene diblock copolymer; and an oil extender, wherein the composition comprises greater than 21 wt% up to about 35 wt% of a combination of the styrene triblock copolymer and the styrene diblock copolymer, and the thermoplastic gel has an oil bleed out of less than 25%, preferably less than about 20% after 1500 hours at 60°C and 200 kPa. The thermoplastic gel of the disclosure may exhibit an oil bleed out of less than about 16% after 1500 hours at 60°C and 120 kPa. The thermoplastic gel of the disclosure may exhibit an oil bleed out of less than about 10%, preferably less than about 5% after 1500 hours at 60°C and 120 kPa.

The thermoplastic gel composition may include a weight ratio of the styrene triblock copolymer to the styrene diblock copolymer in the range of from about 1:1.5 to about 1.5:1, about 1:1.4 to about 1.4:1, about 1:1.3 to about 1.3:1, about 1:1.2 to about 1.2:1, or about 1:1.

The thermoplastic gel of the disclosure may be prepared from a composition comprising from about 25 wt% to about 30 wt% of the combination of the styrene triblock copolymer and the styrene diblock copolymer.

The thermoplastic gel of the disclosure may be prepared from a composition comprising from about 25 wt% to about 30 wt% of the combination of the styrene triblock copolymer and the styrene diblock copolymer and about 61 wt% to about 75 wt% of an oil extender.

The thermoplastic gel of the disclosure may be prepared from a composition comprising from about 8 wt% to about 17 wt%, or about 10 wt% to about 15 wt% of the styrene triblock copolymer. The thermoplastic gel of the disclosure may be prepared from a composition comprising about 7 wt% to about 27 wt%, or about 10 wt% to about 15 wt% of the styrene diblock copolymer. The thermoplastic gel of the disclosure may be prepared from a composition comprising from about 61 wt% to about 75 wt% of an oil extender.

One aspect of the present disclosure relates to a thermoplastic gel prepared from a composition comprising: a styrene triblock copolymer; a styrene diblock copolymer; and an oil extender. The composition may comprise from greater than 21 wt% up to about 35 wt%, or from 25 to 30 wt% of a combination of the styrene triblock copolymer and the styrene diblock copolymer.

In some embodiments, the thermoplastic gel exhibits an oil bleed out of less than 25%, less than about 20%, or preferably less than about 16% after 1500 hours at 60°C and 200 kPa.

In some embodiments, the thermoplastic gel exhibits an oil bleed out of less than about 16%, less than about 10%, or preferably less than about 5% after 1500 hours at 60°C and 120 kPa.

The thermoplastic gel of the disclosure may be prepared from a composition further comprising a styrene triblock copolymer selected from poly(styrene-butadienestyrene), poly(styrene-ethylene/butylene-styrene), poly(styrene-ethylene/propylene-styrene), poly(styrene-ethylene/ethylene-propylene-styrene), and any combination thereof; and a styrene diblock copolymer selected from poly(styrene-ethylene/propylene), poly(styrene-ethylene/butylene.

In some embodiments, the styrene triblock copolymer is a poly(styrene-ethylene/butylene-styrene) (SEBS) or poly(styrene-ethylene/propylene-styrene) (SEPS).

In some embodiments, the styrene diblock copolymer is poly(styrene-ethylene/propylene) (SEP).

In some embodiments, the thermoplastic gel of the disclosure is prepared from a composition comprising a styrene triblock copolymer that is poly(styrene-ethylene/butylene-styrene) and a styrene diblock copolymer that is poly(styrene-ethylene/propylene).

In some embodiments, the thermoplastic gel of the disclosure is prepared from a composition comprising a styrene triblock copolymer is poly(styrene-ethylene/propylene-styrene) and the styrene diblock copolymer is poly(styrene-ethylene/propylene).

In some embodiments, the thermoplastic gel of the disclosure is prepared from a composition comprising 12 to 16 wt% of the styrene triblock copolymer; 10 to 16 wt% of the styrene diblock copolymer; and 65 to 75 wt% of the oil extender, and optionally one or more additives.

The thermoplastic gel of the disclosure may be prepared from a composition comprising an oil extender selected from a synthetic oil, a mineral oil, and any combination thereof. The oil extender may be a polyalphalefin (PAO), or a white mineral oil. In some embodiments, the oil extender has a kinematic viscosity within the range of about 10 to about 200 cSt (mm2/s), or about 40 to about 80 cSt (mm2/s), at 40 °C.

In some embodiments, the oil extender is white mineral oil.

In some embodiments, the oil extender is a polyalphaolefin (PAO)synthetic hydrocarbon.

In some embodiments, the oil extender is present in the thermoplastic gel composition at from 61 to 75 wt%, 63 to 73 wt %, or from about 64 to about 72 wt%.

The thermoplastic gel of the disclosure may be prepared from a composition further comprising an additive, for example, mineral filler, process aid, an anti-tack agent, a stabilizer, a pigment, and/or mixtures thereof.

In some embodiments, the ratio of styrenic triblock to diblock copolymers is from about 1.4:1 to about 1:1.4, or from about 1.2:1 to about 1:1.2, or about 1:1.

Thermoplastic gels of the disclosure may exhibit one or more of the following properties: a final hardness in a range of 40 to 100 g, or H₆₀ₛ hardness in the range of 40 to 200 g, a stress relaxation (60 s value) within the range of 10-45%; a tensile strength in a range from 0.2 to 1 MPa; an ultimate elongation in a range from 1000-2300%, a toughness in the range of 0.5 to 4 mJ/m3, a tack time in the range of 0.5 to 2 seconds, an adhesive force in the range of 150 to 550 g, and an adhesiveness of 1 to 10 mJ,

In some embodiments, a thermoplastic gel is provided that is prepared from a composition comprising a styrenic triblock copolymer, a styrenic diblock copolymer, and an oil extender, and optionally at least one additive selected from the group consisting of a mineral filler, process aid, an anti-tack agent, a stabilizer, a pigment, and mixtures thereof, wherein the gel exhibits less than 5 wt % oil bleed out under 120 kPa at 60 °C over a period of at least 1500 hours, while retaining favorable gel properties including a final hardness in a range of 14 to 42 Shore OOO Hardness, or H₆₀ₛ hardness in the range of 40 to 200 g, and a range of stress relaxation (60 s value) of from 10-45%; a tensile strength in a range from 0.2 to 1 MPa; and ultimate elongation or elongation to Break (%) in a range from 1000-2300%.

In some embodiments, the thermoplastic gels of the disclosure exhibit favorable gel properties including a final hardness in a range of 40 to 100 g, or H₆₀ₛ hardness in the range of 40 to 200 g, a stress relaxation within the range of 10-45%; a tensile strength in a range from 0.2 to 1 MPa; an ultimate elongation in a range from 1000-2300%, a toughness in the range of 0.5 to 4 mJ/m3, a tack time in the range of 0.5 to 2 seconds, an adhesive force in the range of 150 to 550 g, and an adhesiveness of 1 to 10 mJ, as shown in Table 7.

In some embodiments, a method of making a thermoplastic gel is provided, comprising mixing a composition comprising a styrenic triblock copolymer, a styrenic diblock copolymer, and an oil extender, and optionally at least one additive selected from the group consisting of a mineral filler, process aid, an anti-tack agent, a stabilizer, pigment, and mixtures thereof; and heating the composition to form the thermoplastic gel, wherein the gel exhibits less than 5 wt % oil bleed out under 120 kPa at 60 °C over a period of at least 1500 hours, while retaining favorable gel properties including a final hardness in a range of 14 to 42 Shore OOO Hardness, or H₆₀ₛ hardness in the range of 40 to 200 g, and a range of stress relaxation (60 s value) of from 10-45%; a tensile strength in a range from 0.2 to 1 MPa; and ultimate elongation or elongation to Break (%) in a range from 1000-2300%.

In some embodiments, the thermoplastic gels of the disclosure exhibit less than 30% creep at 8GR, 70 °C, at 24 hrs.

In another embodiment, the disclosure provides a method of making a thermoplastic gel comprising preparing a pre-swell comprising a styrene triblock copolymer, a styrene diblock copolymer, and an oil extender, and optionally one or more additives; pumping the pre-swell into a mixer; and melting and mixing the pre-swell in the mixer. In some embodiments, the mixing is performed by a static mixer or gelscrew mixer. In some embodiments, the method may further comprise injecting the gel composition to a mold.

In another embodiment, the disclosure provides a closure, enclosure or interconnect system comprising a housing, a cable, and a thermoplastic gel prepared from a composition comprising a styrenic triblock copolymer, a styrenic diblock copolymer, and an oil extender, and optionally at least one additive selected from the group consisting of a mineral filler, an anti-tack agent, a stabilizer, and mixtures thereof, wherein the gel exhibits less than 5 wt % oil bleed out under 120 kPa at 60 °C over a period of at least 1500 hours. In some embodiments, the system further comprises a connector, and, in some instances, a receptacle or port, therein forming an interconnect system. The interconnect system may comprise a mini input/output connector, data connector, power connector, fiber optic connector, or combination thereof.

### BRIEF DESCRIPTION OF THE DRAWINGS

FIG. 1 shows oil loss (%) (i.e., oil bleed out) versus time at 60°C and 200 kPa for two exemplary embodiments of a thermoplastic gel as disclosed herein.
FIG. 2 shows oil loss (%) (i.e., oil bleed out) versus time at 60°C and 120 kPa for two exemplary embodiments of a thermoplastic gel as disclosed herein.
FIG. 3 shows a perspective view of a test block used for measurement of oil loss.
FIG. 4 shows a side view of the test block depicted in FIG. 3.

### DETAILED DESCRIPTION

In the following detailed description, reference is made to the accompanying drawings showing by way of illustration specific embodiments of a thermoplastic gel as disclosed herein. It is to be understood that other embodiments may be utilized and structural or logical changes may be made without departing from the scope of the present disclosure.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment.

Furthermore, the described features, structures, or characteristics of a thermoplastic gel as disclosed herein may be combined in any suitable manner in one or more embodiments. In the following description, numerous specific details are included to provide a thorough understanding of embodiments. One skilled in the relevant art will recognize, however, that the disclosure can be practiced without one or more of the specific details, or with other methods, components, materials, and so forth. In other instances, well-known structures, materials, or operations are not shown or described in detail to avoid obscuring aspects of the disclosure. Thus, it is to be understood that other embodiments may be utilized and changes may be made without departing from the scope of the present disclosure.

The following detailed description, therefore, is not to be taken in a limiting sense.

### Definitions

The singular forms "a", "an" and "the" are intended to include the plural forms as well, unless the context clearly indicates otherwise.

The term "and/or" refers to and encompasses any and all possible combinations of one or more of the associated listed items.

The term "about," when referring to a measurable value such as an amount of a compound, dose, time, temperature, and the like, is meant to encompass variations of 10%, 5%, 1%, 0.5%, or even 0.1% of the specified amount.

The term "ambient room temperature" as used herein refers to a temperature in the range of from 15 °C to 25 °C (59-77 °F), or up to 30 °C, depending on climatic conditions.

Unless otherwise specified as used herein, reference to "%" refers to weight %.

The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms, including technical and scientific terms used in the description, have the same meaning as commonly understood by one of ordinary skill in the art to which this disclosure belongs. In the event of conflicting terminology, the present specification is controlling.

As used herein, the term "styrene diblock copolymer" refers to a diblock copolymer having a polystyrene segment and another elastomeric segment. Styrene diblock copolymers are known. Examples of a "styrene diblock copolymer" include poly(styrene-ethylene/propylene) (SEP), poly(styrene-ethylene/butylene) (SEB), and combinations thereof. Other examples of a "styrene diblock copolymer" include poly(styrene-butadiene) and poly(styrene-isoprene). The styrene diblock copolymer can have from about 30 wt% to about 40 wt% styrene, for example, from about 31 wt% to about 39 wt % styrene, from about 32 wt% to about 38 wt % styrene, from about 33 wt% to about 37 wt% styrene, from about 34 wt% to about 36 wt% styrene, or from about 34 wt% to about 39 wt% styrene, for example, about 36 wt% styrene or about 37 wt% styrene.

As used herein, the term "styrene triblock copolymer" refers to a triblock copolymer having polystyrene end segments and another elastomeric center segment. Styrene triblock copolymers are known. Examples of a "styrene triblock copolymer" include poly(styrene-butadiene-styrene) (SBS), poly(styrene-ethylene/butylene-styrene) (SEBS), poly(styrene-ethylene/propylene-styrene) (SEPS), poly(styrene-ethylene/ethylene-propylene-styrene) (SEEPS), and combinations thereof. Another example of a "styrene triblock copolymer" is poly(styrene-isoprene-styrene) (SIS). The styrene triblock copolymer may have from about 30 wt% to about 40 wt% styrene, for example, from about 31 wt% to about 39 wt% styrene, from about 32 wt% to about 38 wt % styrene, from about 33 wt % to about 37 wt% styrene, from about 34 wt% to about 36 wt % styrene, from about 30 wt% to about 33 wt % styrene, from about 31 wt% to about 32 wt % styrene, or from about 32 wt% to about 34 wt% styrene. For example, the styrene triblock copolymer can have about 32 wt% styrene, about 33 wt% styrene, or about 35 wt% styrene.

The styrene triblock copolymer may have from about 30 mol% to about 40 mol% styrene, for example, from about 31 mol% to about 39 mol% styrene, from about 32 mol% to about 38 mol% styrene, from about 33 mol% to about 37 mol% styrene, from about 34 mol% to about 36 mol% styrene, from about 30 mol% to about 33 mol% styrene, from about 31 mol% to about 32 mol% styrene, or from about 32 mol% to about 34 mol% styrene. For example, the styrene triblock copolymer can have about 32 mol% styrene, about 33 mol% styrene, or about 35 mol% styrene content.

The term "% rubber" as used herein refers to the total wt% of triblock + diblock copolymers in the composition. In some embodiments, thermoplastic gels are provided prepared from compositions comprising between 21% to 35%, 21% to 31%, or 25% to 30% rubber (combined wt% of diblock +triblock copolymers).

As used herein, the term "pre-swell" refers to a mixture of components used in making a thermoplastic gel prior to melting. Thus, the "pre-swell" contains the styrene triblock copolymer, the styrene diblock copolymer, the oil extender, and optionally one or more additives.

Aspects of the present disclosure relate to thermoplastic gels with little or no oil bleed out when compared to thermoplastic gels of the prior art. In particular, the present inventors have discovered that decreasing oil extender content and increasing rubber content as a combination of a styrene triblock copolymer and a styrene diblock copolymer provides a thermoplastic gel with little or no oil bleed out at certain conditions as described herein. The present inventors have further discovered modifying the weight ratio of styrene triblock copolymer to styrene diblock copolymer in the composition used to prepare the thermoplastic gel by increasing the amount of styrene diblock copolymer advantageously provides a thermoplastic gel with little to no oil bleed out at certain conditions as described herein.

Disclosed herein is a thermoplastic gel prepared from a composition where the composition comprises a styrene triblock copolymer, a styrene diblock copolymer, and an oil extender.

In some embodiments, the styrenic diblock copolymer may be a polystyrene-poly(ethylene-propylene) (SEP) diblock copolymer. The SEP diblock copolymer, may be selected from, for example, available from Kraton Polymers as, e.g., KRATON G1701 or available from Kuraray America, Inc. as, e.g., SEPTON 1020.

In some embodiments, the styrenic triblock copolymer may be a polystyrene-poly(ethylene-butylene)- polystyrene (SEBS) triblock copolymers available from Kraton Polymers as KRATON G1640, G1641, G1651, and the like. In some embodiments, the styrenic triblock copolymer may be a polystyrene-poly(ethylene-propylene)-polystyrene (SEPS) triblock copolymer, for example, available from Kuraray America, Inc. as SEPTON 2006. In some embodiments, the triblock copolymer may be dusted with talc, or silica, for example, as a process aid. In some embodiments, the triblock copolymer is KRATON G1640 ET (talc dusted 0.6%). In some embodiments, the triblock copolymer is KRATON G1641 HS (silica dusted 2%). In some embodiments, the triblock copolymer is SEPTON 2006. In some embodiments, the diblock copolymer is SEPTON 1020 (SEP).

In some embodiments, the styrene triblock copolymer is a SEBS and the styrene diblock copolymer is a SEP.

In some embodiments, the styrene triblock copolymer is a SEPS and the styrene diblock copolymer is a SEP.

In certain embodiments, the thermoplastic gel has less than 25% oil bleed out after a period of time when the gel is under compression of 200 kPa at 60° C. In an embodiment, the thermoplastic gel has less than 25% oil bleed out after 1500 hours when the gel is under compression of 200 kPa at 60° C. In an embodiment, the thermoplastic gel has less than 25% oil bleed out upon equilibrium when the gel is under compression of 200 kPa at 60° C.

In certain embodiments, the thermoplastic gel has less than about 20% oil bleed out after a period of time when the gel is under compression of 200 kPa at 60° C. In an embodiment, the thermoplastic gel has less than about 20% oil bleed out after 1500 hours when the gel is under compression of 200 kPa at 60° C. In an embodiment, the thermoplastic gel has less than about 20% oil bleed out upon equilibrium when the gel is under compression of 200 kPa at 60° C.

In certain embodiments, the thermoplastic gel has less than about 16% oil bleed out after a period of time when the gel is under compression of 120 kPa at 60° C. In an embodiment, the thermoplastic gel has less than about 16% oil bleed out after 1500 hours when the gel is under compression of 120 kPa at 60° C. In an embodiment, the thermoplastic gel has less than about 16% oil bleed out upon equilibrium when the gel is under compression of 200 kPa at 60° C.

In certain embodiments, the thermoplastic gel has less than about 10% oil bleed out after a period of time when the gel is under compression of 120 kPa at 60° C. In an embodiment, the thermoplastic gel has less than about 10% oil bleed out after 1500 hours when the gel is under compression of 120 kPa at 60° C. In an embodiment, the thermoplastic gel has less than about 10% oil bleed out upon equilibrium when the gel is under compression of 120 kPa at 60° C.

In certain embodiments, the thermoplastic gel has less than about 5% oil bleed out after a period of time when the gel is under compression of 120 kPa at 60° C. In an embodiment, the thermoplastic gel has less than about 5% oil bleed out after 1500 hours when the gel is under compression of 120 kPa at 60° C. In an embodiment, the thermoplastic gel has less than about 5% oil bleed out upon equilibrium when the gel is under compression of 120 kPa at 60° C.

Oil bleed out is measured on a wire mesh as explained in Example 7 where the oil loss may exit the gel through the mesh. In certain embodiments, the oil loss is measured after 200 hours, 400 hours, 600 hours, 800 hours, 1000 hours, 1200 hours, 1400 hours, or 1500 hours.

In an embodiment, the composition comprises greater than 21 wt% up to about 35 wt% of a combination of the styrene triblock copolymer and the styrene diblock copolymer. In an embodiment, the composition comprises greater than 21 wt% up to about 33 wt% of a combination of the styrene triblock copolymer and the styrene diblock copolymer. In an embodiment, the composition comprises greater than 21 wt % up to about 31 wt% of a combination of the styrene triblock copolymer and the styrene diblock copolymer. In an embodiment, the composition comprises greater than 21 wt% up to about 30 wt% of a combination of the styrene triblock copolymer and the styrene diblock copolymer. In an embodiment, the composition comprises greater than 21 wt% up to about 28 wt% of a combination of the styrene triblock copolymer and the styrene diblock copolymer. In an embodiment, the composition comprises greater than 21 wt% up to about 26 wt% of a combination of the styrene triblock copolymer and the styrene diblock copolymer.

In an embodiment, the composition comprises from about 25 wt% to about 30 wt% of a combination of the styrene triblock copolymer and the styrene diblock copolymer. In an embodiment, the composition comprises from about 26 wt% to about 30 wt% of a combination of the styrene triblock copolymer and the styrene diblock copolymer. In an embodiment, the composition comprises from about 26 wt% to about 29 wt% of a combination of the styrene triblock copolymer and the styrene diblock copolymer. In an embodiment, the composition comprises from about 26 wt% to about 28 wt% of a combination of the styrene triblock copolymer and the styrene diblock copolymer. In an embodiment, the composition comprises from about 26 wt% to about 27 wt% of a combination of the styrene triblock copolymer and the styrene diblock copolymer.

In certain embodiments, a weight ratio of the styrene triblock copolymer to the styrene diblock copolymer is from about 1:1.5 to about 1.5:1. In some embodiments, a weight ratio of the styrene triblock copolymer to the styrene diblock copolymer is from about 1:1.4 to about 1.4:1. In some embodiments, a weight ratio of the styrene triblock copolymer to the styrene diblock copolymer is from about 1:1.3 to about 1.3:1. In some embodiments, a weight ratio of the styrene triblock copolymer to the styrene diblock copolymer is from about 1:1.2 to about 1.2:1. In certain embodiments, a weight ratio of the styrene triblock copolymer to the styrene diblock copolymer in the composition is about 1:1.

In certain embodiments, the composition comprises from about 8 wt% to about 17 wt% of the styrene triblock copolymer. In some embodiments, the composition comprises from about 12 wt% to about 17 wt% of the styrene triblock copolymer.

In an embodiment, the composition comprises from about 13 wt% to about 14 wt% of the styrene triblock copolymer. In an embodiment, the composition comprises about 13 wt% of the styrene triblock copolymer. In an embodiment, the composition comprises about 14 wt% of the styrene triblock copolymer.

In certain embodiments, the composition comprises about 7 wt% to about 27 wt% of the styrene diblock copolymer. In some embodiments, the composition comprises about 7 wt% to about 15 wt% of the styrene diblock copolymer.

In an embodiment, the composition comprises from about 13 wt% to about 14 wt% of the styrene diblock copolymer. In an embodiment, the composition comprises about 13 wt% of the styrene diblock copolymer. In an embodiment, the composition comprises about 14 wt% of the styrene diblock copolymer.

The styrene triblock copolymer may be selected from poly(styrene-butadienestyrene), poly(styrene-ethylene/butylene-styrene), poly(styrene-ethylene/propylene-styrene), poly(styrene-ethylene/ethylene-propylene-styrene), and any combination thereof. The styrene triblock copolymer may be selected from poly(styrene-ethylene/butylene-styrene), poly(styrene-ethylene/propylene-styrene), and any combination thereof. In an embodiment, the styrene triblock copolymer is poly(styrene-ethylene/butylene-styrene).

The styrene diblock copolymer may be selected from poly(styrene-ethylene/propylene), poly(styrene-ethylene/butylene), and any combination thereof. In an embodiment, the styrene diblock copolymer is poly(styrene-ethylene/propylene).

In an embodiment, the composition comprises an oil extender. The oil extender may be a non-reactive oil extender. The oil extender may be present in the thermoplastic gel composition at from about 61 wt% to about 75 wt% of the oil extender. In an embodiment, the composition comprises from about 62 wt% to about 74 wt% of the oil extender. In an embodiment, the composition comprises from about 63 wt% to about 73 wt% of the oil extender. In an embodiment, the composition comprises from about 64 wt% to about 72 wt% of the oil extender. In an embodiment, the composition comprises from about 65 wt% to about 71 wt% of the oil extender. In an embodiment, the composition comprises from about 66 wt% to about 70 wt% of the oil extender.

In an embodiment, the composition comprises from about 65 wt% to about 70 wt% of the oil extender. In an embodiment, the composition comprises from about 66 wt% to about 70 wt% of the oil extender. In an embodiment, the composition comprises from about 67 wt% to about 70 wt% of the oil extender. In an embodiment, the composition comprises from about 68 wt% to about 70 wt% of the oil extender. In an embodiment, the composition comprises from about 69 wt% to about 70 wt% of the oil extender.

The oil extender may be selected from oils conventionally used to extend copolymer materials and are known in the art. The oil may be a synthetic oil such as a polyalphaolefin (PAO) oil (e.g., polybutene, polydecene, polydodecene, or polytetradecene), a mineral oil, or any combination thereof. In some embodiments, the oil extender has a kinematic viscosity within the range of about 10 to about 200 cSt (mm2/s), or about 40 to about 80 cSt (mm2/s), at 40 °C. The oil extender may be a PAO. The PAO may be SynFluid PAO 8 cSt, having kinematic viscosity of about 46.4 cSt (mm2/s) at 40 °C. In an embodiment, the oil extender comprises a mineral oil. The oil extender may be a white mineral oil, such as CAS NO. 8042-47-5, e.g. FinaVestan A 360 B, e.g., having viscosity, kinematic, of about 68 mm2/s (cSt) at 40 °C. In an embodiment, the oil extender is selected from a synthetic oil, a mineral oil, vegetable oil, and any combination thereof.

### Anti-Tack Agents

In certain embodiments, the gel composition comprises an anti-tack or slip agent. Such anti-tack agents may be added to the base polymer to reduce the gel composition's tackiness or even achieve a certain level of surface lubrication. In some embodiments, polyethylene or polypropylene may be used as the anti-tack agent. In other embodiments, the anti-tack agent is a silicone, silane, or siloxane compound, or a copolymer thereof, such as an organo-modified siloxane. It has been discovered that use of certain anti-tack agents (such as silicone, silane, or siloxane compounds) will allow for an increased amount of base polymer (e.g., diblock) in the overall gel composition, which may provide improved oil retention of the gel. In other words, the use of certain anti-tack agents may provide improved oil retention and tackiness characteristics while maintaining other gel characteristics. In some embodiments, the anti-tack agent is between about 0.1 and 10 wt% of the overall composition, and in other embodiments between about 0.2 and 5 wt% of the overall composition. Tack reducing agents that seem to be most effective are those that are insoluble in the hydrocarbon extender oil such as silicone oligomers based on polydimethyl siloxane or phenyl methyl polysiloxane. For example, the anti-tack agent may be TEGOMER^{®} M Si 2650 (organo-modified siloxane containing non-reactive aromatic groups; EVONIK). In another example, the anti-tack agent may be a non-reactive silicone oil.

### Stabilizers

The gel compositions disclosed and made by methods disclosed herein may comprise at least one stabilizer. In particular, the gel may include a stabilizer comprising between about 0.1-5 wt% or about 0.5-3 wt%, of the overall composition.

In some embodiments, the stabilizer is selected from the group consisting of antioxidants, acid-scavengers, light and UV absorbers/stabilizers, heat stabilizers, metal deactivators, free radical scavengers, carbon black, antifungal agents, and mixtures thereof. The stabilizer may be selected from the group consisting of: hindered phenols (e.g., Irganox^{™} 1076, commercially available from Ciba-Geigy Corp., Tarrytown, New York); phosphites (e.g., Irgatos^{™} 168, commercially available from Ciba-Geigy Corp.); metal deactivators (e.g., Irganox^{™} D1024, commercially available from Ciba-Geigy Corp.); sulfides (e.g., Cyanox LTDP, commercially available from American Cyanamid Co., Wayne, New Jersey); light stabilizers (e.g., Cyasorb UV-531, commercially available from American Cyanamid Co.); phosphorous containing organic compounds (e.g., Fyrol PCF and Phosflex 390, both commercially available from Akzo Nobel Chemicals Inc. of Dobbs Ferry, New York); acid scavengers (e.g., DHT-4A, commercially available from Kyowa Chemical Industry Co. Ltd through Mitsui & Co. of Cleveland, Ohio, and hydrotalcite); and mixtures thereof.

In certain embodiments, the gel composition comprises at least one stabilizer. In particular, the gel may include a stabilizer comprising between about 0.1-5 wt%, about 0.5-3 wt%, or about 1-2 wt% of the overall composition.

In some embodiments, the stabilizer is selected from the group consisting of antioxidants, acid-scavengers, light and UV absorbers/stabilizers, heat stabilizers, metal deactivators, free radical scavengers, carbon black, antifungal agents, and mixtures thereof. In some embodiments, the stabilizer is a hindered phenolic antioxidant. The stabilizer may be selected from the group consisting of: hindered phenols (e.g., Irganox^{™} 1076, commercially available from Ciba-Geigy Corp., Tarrytown, New York); phosphites (e.g., Irgafos^{™} 168, commercially available from Ciba-Geigy Corp.); metal deactivators (e.g., Irganox^{™} D1024, commercially available from Ciba-Geigy Corp.); sulfides (e.g., Cyanox LTDP, commercially available from American Cyanamid Co., Wayne, New Jersey); light stabilizers (e.g., Cyasorb UV-531, commercially available from American Cyanamid Co.); phosphorous containing organic compounds (e.g., Fyrol PCF and Phosflex 390, both commercially available from Akzo Nobel Chemicals Inc. of Dobbs Ferry, New York); acid scavengers (e.g., DHT-4A, commercially available from Kyowa Chemical Industry Co. Ltd through Mitsui & Co. of Cleveland, Ohio, and hydrotalcite); and mixtures thereof.

The composition further optionally comprises one or more additives. Exemplary additives include antioxidants, UV absorbers, light stabilizers, pigments, viscosity modifiers, and anti-tack agents (e.g., silicone oils or organo-modified siloxanes). In certain embodiments, the additional additives may include at least one material selected from the group consisting of Dynasylan 40, PDM 1922, Songnox 1024, Kingnox 76 (antioxidant/heat stabilizer; CAS No. 2082-79-3; Hydrocinnamic acid, 3,5-di-t-butyl-4-hydroxy-, octadecyl ester), IRGANOX 1076 (antioxidant/heat stabilizer; CAS No. 2082-79-3; Hydrocinnamic acid, 3,5-di-t-butyl-4-hydroxy-, octadecyl ester; BASF),, Kingnox B220, IRGANOX^{®} B220 (thermal stabilizer; blend of 75% tris(2,4-ditertbutylphenyl)phosphite and 25% pentaerythritol tetrakis[3-[3,5-di-tert-butyl-4-hydroxyphenyl]propionate), DHT-4A, Kingsorb 326 (UV Stabilizer; hydroxyphenylbenzotriazole class), Tinuvin 326 (e.g., UV326, 2'-(2'-hydroxy-3'-tert-butyl-5'-methylphenyl)-5-chlorobenzotriazole; Hunan Chemical BV), pigment, TEGOMER^{®} M Si 2650 (organo-modified siloxane containing non-reactive aromatic groups; EVONIK) anti-tack agent. and mixtures thereof. In some embodiments, the additives comprise between about 0.1 and 5 wt% of the overall composition, between about 0.1 and 3 wt% of the overall composition, between about 0.1 and 2 wt% of the overall composition, or between about 0.1 and 1 wt% of the overall composition.

In some embodiments, a thermoplastic gel is provided comprising a mineral filler, for example as a process aid, between 0.1 wt% and 5 wt% of the overall composition. In some embodiments, the mineral filler is selected from the group consisting of talc, calcium carbonate, clay, wollastonite, silica, silicates, glass, and combinations thereof. In a specific embodiment, the mineral filler is talc.

The thermoplastic gel disclosed herein can be used in an enclosure or interconnect system as a sealant on cables entering and exiting the enclosure. The cables can be fiber optic cables, copper cables, or any combination thereof. In embodiments, during such use, the thermoplastic gel is under a sealing pressure from about 20 kPa to about 200 kPa. In other embodiments, during such use, the thermoplastic gel is under a sealing pressure from about 50 kPa to about 150 kPa.

The thermoplastic gel exhibits certain desirable measurable properties. For example, in some embodiments, the thermoplastic gel may exhibit a hardness in the range of 14 to 42 Shore OOO Hardness, or 40 to 200 g, as measured according to methods known in the art. In certain embodiments, the Shore hardness gauge may be measured according to ISO868 or ASTM D2240, or by a Texture Analyzer, as described herein.

In other embodiments, hardness can be measured on a texture analyzer. For example, a LFRA Texture Analyzer-Brookfield may include a probe assembly fixed to a motor driven, bi-directional load cell. In such a system, the probe is driven vertically into the sample at a pre-set speed and to a pre-set depth. For example, a probe comprising a stainless steel ball having diameter of 6.35 mm, and a probe speed of 2 mm/sec may be used with a target depth of 4 mm, and a hold time of 60 seconds. The trigger point may be 4 grams. The hardness is the amount of force needed to push the probe into the test sample. The H₆₀ₛ, 60 second hardness value, or 60 second peak load hardness, should not exceed 250 g. The preferred H₆₀ₛ hardness range is less than 200g and most preferred is less than about 120g. Similarly, to obtain acceptable mechanical properties and the ability of the closure to be opened and resealed, a minimum 60s hardness of about 40g is required. The gels of the disclosure may exhibit H₆₀ₛ hardness in the range of 40 to 200 g, 50 to 150 g, or about 60 to about 140 g. In some embodiments, the final load hardness may be from 40 to 200 g, 50 to 150 g, or from about 60 to about 85 g. In some embodiments, the thermoplastic gel may have a hardness in the range of 16 to 37 Shore OOO, or 50 to 160 g. In yet other embodiments, the thermoplastic gel has a hardness in the range of 18 to 33 Shore OOO, or 60 to 140 g.

The thermoplastic gel may exhibits certain desirable tack properties such as tackiness, adhesive force, adhesion (adhesiveness), and/or tack time. The tack properties may be measured may be measured using a Texture Analyzer, for example, a Brookfield RAY-K-00184. For example, the texture analyzer may be fitted with a cylindrical aluminum probe with a diameter of 20 mm, using 700 g aluminum probe, with a trigger load of 4 g, a probe speed of 2.0 mm/sec and a hold time of 15 sec. Adhesion (adhesiveness) is the area under the force vs. distance curve for all negative values of load detected at the end of the test as the probe returns to the home position, reported in mJ. Adhesive force is the peak negative value, for example, reported in g. Adhesive force (N), or negative force to remove probe from the gel (g), adhesiveness (mJ), and tack time (s) may be measured. Adhesiveness is a measure of stickiness and is calculated as the area under the negative peak as probe withdraws after the first compression. In some embodiments for the thermoplastic gels, the adhesiveness may be from 1.2 to 10 mJ, or 1.5 to 3 mJ, or no more than 10 mJ, no more than 5 mJ, or no more than 3 mJ when measured by Texture Analyzer.

Adhesive force is the force required to pull probe from sample (suction). In some embodiments for the thermoplastic gels, the adhesive force threshold is no more than 550 g, no more than 400 g, no more than 300 g, or no more than 250 g, or from 100g to 550 g, or 120 g to 400 g, or 130 to 300 g when measured by Texture Analyzer.

In some embodiments for the thermoplastic gels, the tack time is no more than 2 sec, no more than 1.5 sec, or no more than 1.2 sec, or from 0.2 to 2 sec, or 0.5 to 1.5 sec when measured by Texture Analyzer.

In some embodiments, the thermoplastic gels of the disclosure may be subjected to a creep test. The creep test may be performed, for example, according to ASTM D6147, standard method for thermoplastic elastomer, determination of force decay (stress relaxation) in compression. When a constant strain is imposed on rubber, the force necessary to maintain the strain is not constant but decreases with time; this phenomenon is called force decay (stress relaxation). Conversely, when rubber is subjected to a constant stress, in increase in deformation takes place in time; this behavior is called creep. The temperature and time intervals should be specified,

In some embodiments, the thermoplastic gel is compressed with a certain strain or deformation (e.g., in certain embodiments, to 50% of its original size). This causes a certain stress in the material. The stress is now reduced because the material relaxes. In certain embodiments, the stress relaxation of the gel has a possible range between 20 and 60% when subjected to a tensile strain or deformation of about 50% of the gel's original size, wherein the stress relaxation is measured after a one minute hold time at 50% strain. In other embodiments, the stress relaxation of the gel is between 25% and 50% when subjected to a tensile strain of about 50%. A higher stress relaxation indicates that once a gel is installed in a closure, the gel will require less stress in order for it to seal.

Tensile properties may be tested under ASTM D412 or ISO37. The ability to resist breaking under tensile stress is an important measurable property of the thermoplastic gels. The force per unit area (MPa) required to break a material is the ultimate tensile strength, or tensile strength at break. Tensile strength of the thermoplastic gels of the disclosure may be in the range of from about 0.1 to about 1.5 MPa, or from about 0.2 to 1 MPa, or from about 0.3 to about 1 MPa. The ultimate elongation (UE) is the percentage increase in length that occurs before it breaks under tension. Ultimate elongation of the thermoplastic gels of the disclosure may be in a range of from 1000% to 2300 %, or from about 1100% to about 2000%, or from about 1150% to about 1900%. The combination of high ultimate tensile strength and high elongation leads to materials of high toughness. Toughness of the thermoplastic gels of the disclosure may range from about 0.5 to about 10 mJ/m3, or about 0.7 to about 4 mJ/m3.

The present disclosure also relates to a method of making a thermoplastic gel as disclosed herein.

Rubber additives including styrene triblock copolymer, styrene diblock copolymer, oil extenders, and optional additives selected from anti-tack agents, heat stabilizers, UV stabilizers, pigments, may be subjected to cryogenic grinding and/or weighing. Materials may be added to a pre-swell mixer and/or enter a pre-swell queue. The preswell may be pumped into a static mixer or gelscrew mixer, followed by injection molding.

Processing problems may occur if the viscosity of the pre-swell is too high, then pump cavitation may occur. In some embodiments, the viscosity of the pre-swell may be reduced by judicious selection of the styrene triblock copolymer, selection of the styrene diblock copolymer, and/or use of relatively less triblock copolymer while maintaining the overall % rubber in the composition (triblock + diblock copolymers). Another possible problem in the process is the undesirable foaming of the gel, possibly due to gas inclusions formed during processing. To improve efficiency of processing, the triblock copolymer may optionally include a process aid. The triblock copolymer may optionally include from 0.1 % to 5%, or 0.5% to 3% of the process aid. For example, the triblock copolymer may be dusted with a process aid selected from a talc or silica powder. It was found that undesirable foaming of the gel could be reduced if triblock copolymer was dusted with talc, rather than silica, or if the triblock was not dusted.

The thermoplastic gels disclosed herein may advantageously be prepared by a melt mixing process. Melt mixing is generally known in the art and involves melting and mixing the components at a temperature sufficient to melt each of the components (i.e., a temperature equal to or greater than the melting temperature of the highest melting component). In certain embodiments, the method of making comprises mixing the gel components together at an elevated temperature (i.e., greater than ambient room temperature) for a certain period of time. The temperature and time at temperature may be adjusted accordingly to target the end properties desired in the gel. Several of those properties are discussed in the section below labeled "Uses and Properties of the Thermoplastic Gel, and Testing Methods." In certain embodiments, the mixing and reacting is conducted at an elevated temperature between about 100-250°C, about 150-220°C, about 180-200°C, or about 200-250°C. Typically, the mixing and reacting is not conducted at a temperature that is above the flashpoint of any of the components.

In some embodiments, the mixing at the elevated temperature is held for a period of time greater than approximately 1 minute, 5 minutes, 10 minutes, 30 minutes, 1 hour, 2 hours, or 3 hours, and less than 24 hours, 12 hours, 8 hours, or 6 hours. In some embodiments, the mixing at the elevated temperature is held for a period of time of approximately 10 minutes, 30 minutes, or between 1 minute and 24 hours, 1-12 hours, 2-8 hours, or 3-6 hours. In some embodiments, the period of time is on the order of approximately 1 minute, 5 minutes, 10 minutes, 30 minutes or 1 hour, and processing/mixing is conducted via injection molding of a pre-blended slurry, which may be more cost effective and avoid degradation of the composition.

The method may include preparing a pre-swell comprising the styrene triblock copolymer, the styrene diblock copolymer, and the oil extender.

An exemplary method of making the thermoplastic gel may include preparing the pre-swell in a pre-swell mixer, pumping the pre-swell into a mixer, such as a static mixer or a screw mixer, where the pre-swell is melted and mixed (i.e., melt mixed) forming the thermoplastic gel. The thermoplastic gel exiting the mixer can be sent to an injection device where the thermoplastic gel is injected into one or more molds. The method further may further comprise mixing the pre-swell prior to pumping the pre-swell into the mixer.

In certain embodiments, the thermoplastic gel of the disclosure is used in a closure, enclosure, or interconnect system. In certain embodiments, the closure system comprises a housing, a cable, and a thermoplastic gel.

In some embodiments, a closure, enclosure or interconnect system is provided comprising a housing, a cable, and a thermoplastic gel prepared from a composition comprising a styrenic triblock copolymer, a styrenic diblock copolymer, and an oil extender, and optionally at least one additive selected from the group consisting of a mineral filler, an anti-tack agent, a stabilizer, and mixtures thereof, wherein the gel exhibits less than 5 wt % oil bleed out under 120 kPa at 60 °C over a period of at least 1500 hours, while retaining favorable gel properties including a final hardness in a range of 14 to 42 Shore OOO Hardness, or H₆₀ₛ hardness in the range of 40 to 200 g, and a range of stress relaxation (60 s value) of from 10-45%; a tensile strength in a range from 0.2 to 1 MPa; and ultimate elongation or elongation to Break (%) in a range from 1000-2300%. In some embodiments, the system further comprises a connector, and, in some instances, a receptacle or port, therein forming an interconnect system. The interconnect system may comprise a mini input/output connector, data connector, power connector, fiber optic connector, or combination thereof.

### EXAMPLES

### Example 1: Thermoplastic Gel Formulation 1

A thermoplastic gel was prepared from a composition containing an oil extender, a styrene triblock copolymer, a styrene diblock copolymer, and several additives (KingNox^{®} 76 and KingNox^{®} B220 antioxidants, KingSorb^{®} 326 UV absorber and light stabilizer, black pigment, and Tegomer^{®} M-SI 2650 anti-tack agent). The styrene triblock copolymer was poly(styrene-ethylene/butylene-styrene) having from about 30.7 to about 32.7 mol% styrene. The styrene diblock copolymer was poly(styrene-ethylene/propylene) having about 36 mol% styrene. The oil extender was a white mineral oil. The formulation of the composition is set forth in Table 1:

**Table 1. Formulation of Example 1.**

| Component | Weight percentage (wt%) |
|---|---|
| styrene triblock copolymer | 14 |
| styrene diblock copolymer | 13 |
| oil extender | 69 |
| additives | 4 |

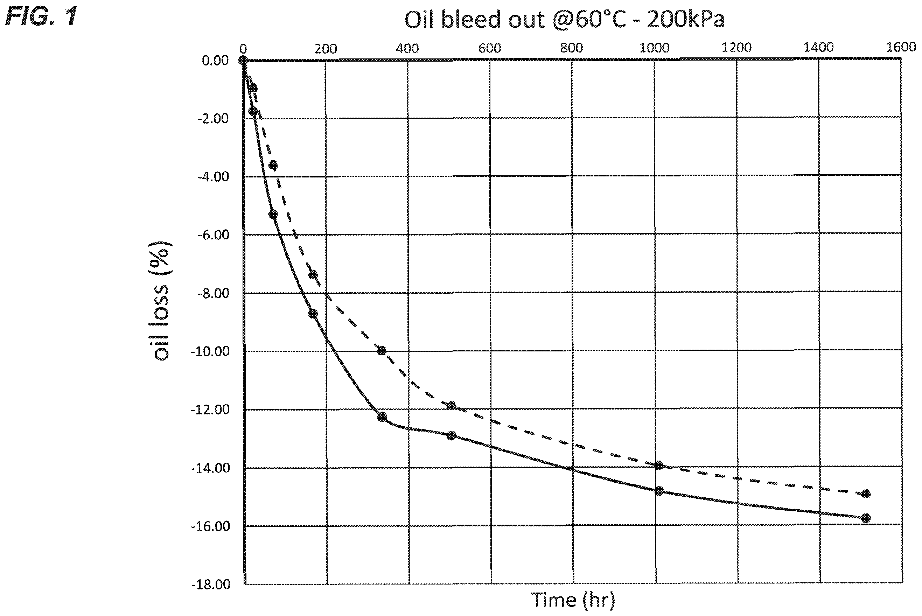

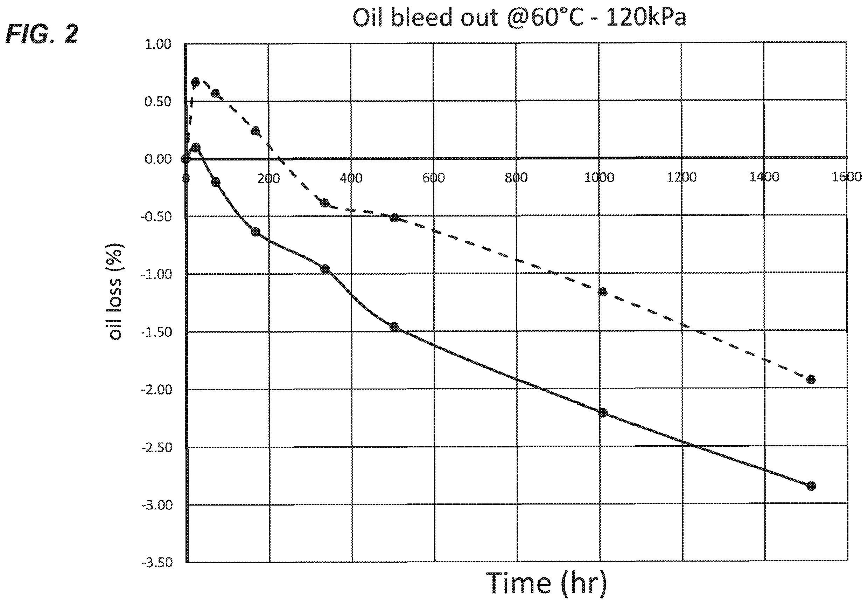

The thermoplastic gel was subjected to oil bleed out testing as set forth in Example 7 at 60°C and a compression of 200 kPa or 120 kPa, respectively, for 1500 hours. The results of the oil bleed out testing are depicted in FIGS. 1 and 2. The dashed line shows the results for this thermoplastic gel formulation. Additional properties are shown in Examples 8 and 9.

### Example 2: Thermoplastic Gel Formulation 2

A thermoplastic gel was prepared from a composition containing an oil extender, a styrene triblock copolymer, a styrene diblock copolymer, and several additives (KingNox^{®} 76 and KingNox^{®} B220 antioxidants, KingSorb^{®} 326 UV absorber and light stabilizer, black pigment, and Tegomer^{®} M-SI 2650 anti-tack agent). The styrene triblock copolymer was poly(styrene-ethylene/propylene-styrene) having about 35 mol% styrene. The styrene diblock copolymer was poly(styrene-ethylene/propylene) having about 36 mol% styrene. The oil extender was a white mineral oil. The formulation of the composition is set forth in Table 2.

**Table 2. Formulation of Example 2**

| Component | Weight percentage (wt%) |
|---|---|
| styrene triblock copolymer | 13 |
| styrene diblock copolymer | 13 |
| oil extender | 70 |
| additives | 4 |

The thermoplastic gel of Example 2 was subjected to oil bleed out testing as set forth in Example 7 at 60°C and a compression of 200 kPa or 120 kPa, respectively, for 1500 hours. The results of the oil bleed out testing are depicted in FIGS. 1 and 2. The solid line shows the results for this thermoplastic gel formulation. Additional properties are shown in Examples 8 and 9.

### Examples 3-6 -Additional Thermoplastic Gels

Additional thermoplastic gels were prepared in a similar fashion as shown in Table 3. Properties of the thermoplastic gels are shown in Examples 7-9.

**Table 3. Additional Thermoplastic Gel Compositions (wt%)**

| Ingredient | Example 1 | Example 2 | Example 3 | Example 4 | Example 5 | Example 6 |
|---|---|---|---|---|---|---|
| PAO Hydrocarbon | - | - | - | 66.2 | - | - |
| White Mineral Oil | 68.9 | 69.9 | 66.2 | - | 66.2 | 70.2 |
| Triblock copolymer | 13.9 | 12.9 | 14.9 | 14.9 | 14.9 | 14.9 |
| Diblock copolymer | 12.9 | 12.9 | 14.9 | 14.9 | 14.9 | 10.9 |
| Hindered phenol heat stabilizer | 1.5 | 1.5 | 1.5 | 1.5 | 1.5 | 1.5 |
| UV Absorber | 0.5 | 0.5 | 0.5 | 0.5 | 0.5 | 0.5 |
| Polydimethyl siloxane fluid | - | - | 1.0 | 1.0 | 1.0 | 1.0 |
| Antitack agent | 2.0 | 2.0 | 1.0 | 1.0 | 1.0 | 1.0 |
| Black pigment color | 0.3 | 0.3 | 0.3 | 0.3 | 0.3 | 0.3 |
| TOTAL | 100.00 | 100.00 | 100.00 | 100.00 | 100.00 | 100.00 |
| Ratio styrenic triblock to diblock copolymers | 1.08:1 | 1:1 | 1:1 | 1:1 | 1:1 | 1.37:1 |
| % rubber triblock + diblock | 27% | 26% | 30% | 30% | 30% | 30% |

### Example 7: Measurement of Oil Bleed Out

Thermoplastic gel Samples were prepared as 3-4 mm thick cylindrical samples, 14mm in diameter.

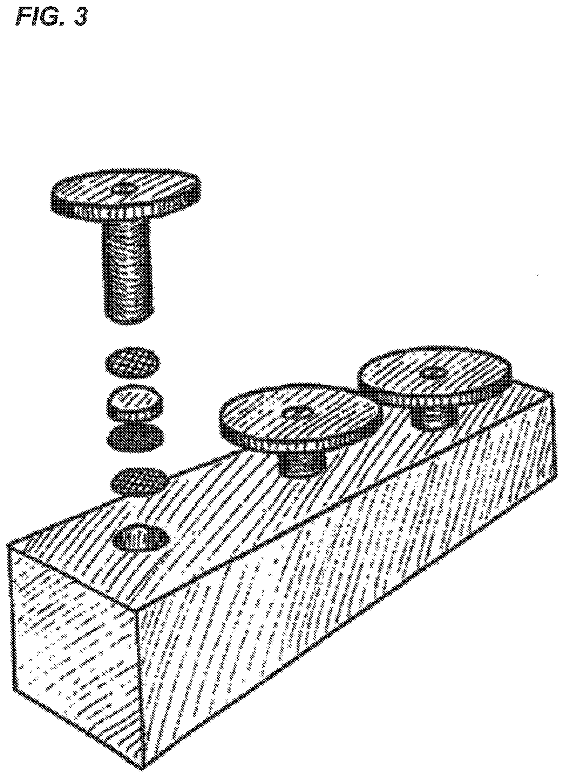

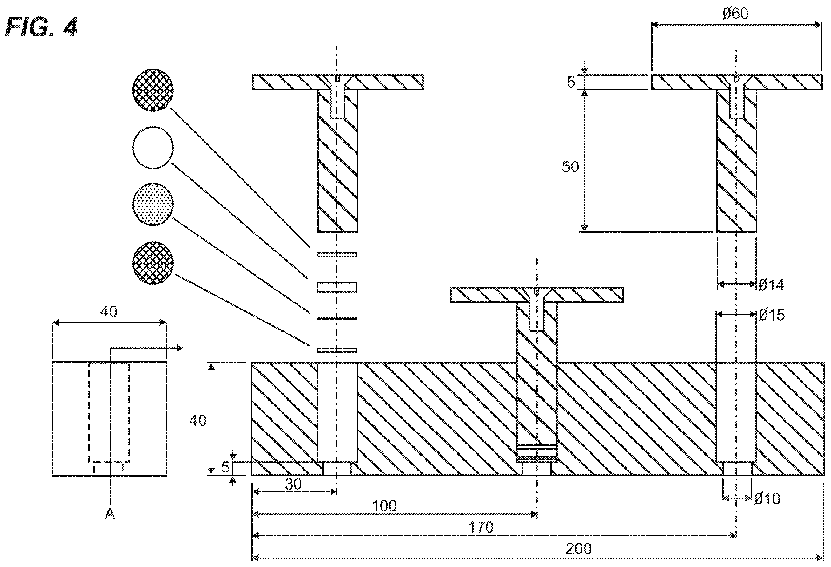

Equipment: test block (see FIGS. 3 and 4), analytical balance, weights, tweezers, cleaning tissue, and screens of 0.16mm² mesh and 0.01mm² mesh

### Test Procedure:

1. Determine the initial weight of each gel sample. Gel samples should be measure in triplicate.
2. Rest the gel on a fine, then more course screen which supports the gel but allows low molecular weight material to separate.
3. Apply pressure on the gel by placing a weight on top of the piston.
4. Place the assembly in an air circulating oven.
5. Remove gel samples from cylinders at regular intervals and blot them carefully on a cleaning paper.
6. Weigh the samples on an analytical balance, replace in the cylinders, replace the weights, and continue the aging process until at least 1500 hours or the sample weight has stabilized (i.e., has reached equilibrium).

From the foregoing detailed description, it will be evident that modifications and variations can be made to the thermoplastic gels disclosed herein without departing from the scope of the disclosure.

### Example 8. Oil Bleed Out Test Results

Oil bleed out test results were performed according to Example 7 for the thermoplastic gels of examples 1 (dashed line) and 2 (solid line) are shown in FIG 1 and Table 4 compared to a thermoplastic gel of Comparative B: SEPS/SEP (14.7%/6.1%) (20.8% rubber) in the oil bleed out test of example 7 at °60 C-200kPa. Comparative B was prepared from a composition having a wt. ratio of styrenic triblock to diblock copolymers of 2.4:1 and total wt% triblock + diblock copolymers of <21 wt%. Example 1 has a wt. ratio of styrenic triblock to diblock copolymers of about 1.1:1 and a total wt% of triblock + diblock copolymers of about 27 wt%. Example 2 has a wt. ratio of styrenic triblock to diblock copolymers of about 1:1 a total wt% of triblock + diblock copolymers of about 26 wt%.

**Table 4. Oil Bleed Out @ °60 C-200kPa**

| Formulation | 70 hrs | 150 hrs | 500 hrs | 1000 hrs | 1500 hrs |
|---|---|---|---|---|---|
| Comparative B | 16.5% | 25.0% | 25.3% | 27.0% | 27.7% |
| Example 1 | 3.5% | 7.5% | 11.8% | 14.1% | 15% |
| Example 2 | 5.3% | 8.6% | 13.0% | 14.9% | 15.8% |

As shown in FIG 1, thermoplastic gels of examples 1 and 2 exhibited less than 10% oil bleed out at 200 hrs at 60 °C and 200 kPa, in contrast to thermoplastic gel comparative B gel which exhibited greater than 25% oil bleed out at 200 hrs at 60 °C and 200 kPa.

As shown in FIG 1 and Table 4, thermoplastic gels of examples 1 and 2 exhibited less than 15% oil bleed out at 1000 hrs at 60 °C and 200 kPa, in contrast to thermoplastic gel comparative B gel which exhibited greater than 25% oil bleed out at 1000 hrs at 60 °C and 200 kPa. Thermoplastic gels of examples 1 and 2 exhibited less than 16% oil bleed out at 1500 hrs at 60 °C and 200 kPa, in contrast to thermoplastic gel comparative B gel which exhibited greater than 25% oil bleed out at 1500 hrs at 60 °C and 200 kPa.

Oil bleed out for the thermoplastic gels of examples 1 and 2 is shown in FIG 2, and Table 5 compared to a thermoplastic gel of Comparative B: SEPS/SEP (14.7%/6.1%) in the oil bleed out test of Example 7 at °60 C-120kPa.

**Table 5. Oil Bleed Out @ °60 C-120kPa**

| Formulation | 70 hrs | 150 hrs | 500 hrs | 1000 hrs | 1500 hrs |
|---|---|---|---|---|---|
| Comparative B | 8.0 | 11.8 | 13.5 | 14.8 | 15.4 |
| Example 1 | - | - | 0.5 | 1.2 | 1.9 |
| Example 2 | 0.2 | 0.6 | 1.5 | 2.2 | 2.9 |

As shown in FIG 2, thermoplastic gels of examples 1 and 2 exhibited less than 1 wt% oil bleed out at 200 hrs at 60 °C and 120 kPa, in contrast to thermoplastic gel comparative B gel which exhibited greater than 11 wt% oil bleed out at 200 hrs at 60 °C and 120 kPa.

As shown in FIG 2 and Table 5, thermoplastic gels of examples 1 and 2 exhibited less than 2 wt% oil bleed out at 500 hrs at 60 °C and 120 kPa, in contrast to thermoplastic gel comparative B gel which exhibited greater than 13 wt% oil bleed out at 500 hrs at 60 °C and 120 kPa.

As shown in FIG 2 and Table 5, thermoplastic gels of examples 1 and 2 exhibited less than 3 wt% oil bleed out at 1000 hrs at 60 °C and 120 kPa, in contrast to thermoplastic gel comparative B gel which exhibited greater than 14% oil bleed out at 1000 hrs at 60 °C and 120 kPa.

As shown in FIG 2 and Table 5, thermoplastic gels of examples 1 and 2 exhibited less than 4 wt% oil bleed out at 1500 hrs at 60 °C and 120 kPa, in contrast to thermoplastic gel comparative B gel which exhibited greater than 15% oil bleed out at 1500 hrs at 60 °C and 120 kPa.

### Example 9. Creep Test

The thermoplastic gels of examples 1 and 2 were subjected to a creep test as shown at Table 6.

**Table 6. Creep Test**

| Creep Test (8GR - 70°C - 24HRs): Extrusion | % |
|---|---|
| Comparative A: SEPS/SEP (12.5%/4.5%) (17% di+triblock) | 58.1 |
| Comparative B: SEPS/SEP (14.7%/6.1%) (20.8% di+triblock) | 11.4 |
| Example 1: SEBS/SEP (14%/13%) (27% di+triblock) | 28.4 |
| Example 2: SEPS/SEP (13%/13%) (26% di+triblock) | 3.2 |

The thermoplastic gels of Examples 1 and 2 exhibited less than 30% creep at 8GR, 70 °C, at 24 hrs.

### Example 10. Additional Thermoplastic Gel Properties

Additional properties of the thermoplastic gels according to the disclosure including tensile properties, hardness parameters, and tack properties as shown Table 7.

**Table 7. Additional Thermoplastic Gel Properties**

| Example | Tensile Properties | | | Hardness | | | Tack Time | | |
|---|---|---|---|---|---|---|---|---|---|
| | TS* | UE* | Tough ness | Peak Load | Final Load | Stress Relaxation | Tack Time | Adh. Force | Adhess. |
| | MPa | % | MJ/m³ | g | g | % | sec | g | mJ |
| Comp. B | 1.333 | 1986 | 5.1 | 102.6 | 76.2 | 25.7 | 0.94 | 146 | 1.7 |
| | | | | | | | | | |
| 4 | 0.38 | 1287 | 1.2 | 113 | 75.5 | 33.1 | 1.44 | 392 | 6.8 |
| | | | | | | | | | |
| 5 | 0.449 | 1305 | 1.4 | 135 | 80.7 | 40.1 | 1.47 | 508 | 8.72 |
| | | | | | | | | | |
| 6 | 0.288 | 1196 | 0.9 | 107 | 77.7 | 27.2 | 1.8 | 298 | 6.81 |
| | | | | | | | | | |
| 1^{a} | 0.3 | 1197 | 0.9 | 95.9 | 61 | 36.3 | 0.93 | 185 | 2.01 |
| | | | | | | | | | |
| 1^{b} | 0.44 | 1315 | 1.35 | 122.0 | 74.25 | 39.1 | 0.68 | 203 | 1.55 |
| | | | | | | | | | |
| 2 | 0.7165 | 1793 | 2.6 | 130.8 | 69.9 | nt | nt | nt | nt |

| | | | | | | | | | |
|---|---|---|---|---|---|---|---|---|---|
| *TS=tensile strength, UE= ultimate elongation a=triblock silica dusted, b=triblock talc dusted, nt = not tested | | | | | | | | | |

The thermoplastic gels of the disclosure exhibit favorable gel properties including a final hardness in a range of 40 to 100 g, or H₆₀ₛ hardness in the range of 40 to 200 g, a stress relaxation (60 s value) within the range of 10-45%; a tensile strength in a range from 0.2 to 1 MPa; an ultimate elongation in a range from 1000-2300%, a toughness in the range of 0.5 to 4 mJ/m3, a tack time in the range of 0.5 to 2 seconds, an adhesive force in the range of 150 to 550 g, and an adhesiveness of 1 to 10 mJ, as shown in Table 7.

## Claims

1. A thermoplastic gel prepared from a composition comprising:
a styrene triblock copolymer;
a styrene diblock copolymer; and
an oil extender,
wherein the composition comprises greater than 21 wt% up to 35 wt% of a combination of the styrene triblock copolymer and the styrene diblock copolymer; a weight ratio of the styrene triblock copolymer to the styrene diblock copolymer of from 1:1.5 to 1.5:1; and the thermoplastic gel has an oil bleed out of less than 25% after 1500 hours at 60°C and 200 kPa when measured as set forth in the specification.

2. The thermoplastic gel of claim 1, wherein a weight ratio of the styrene triblock copolymer to the styrene diblock copolymer is from 1:1.4 to 1.4:1; from 1:1.3 to 1.3:1; from 1:1.2 to 1.2:1; or 1:1.

3. The thermoplastic gel of claim 1 or 2, wherein the thermoplastic gel has an oil bleed out of less than 16% after 1500 hours at 60°C and 120 kPa; less than 20% after 1500 hours at 60°C and 200 kPa; or less than 5% after 1500 hours at 60°C and 120 kPa.

4. The thermoplastic gel of any one of claims 1-3, wherein the composition comprises from 25 wt% to 30 wt% of the combination of the styrene triblock copolymer and the styrene diblock copolymer.

5. The thermoplastic gel of any one of claims 1-4, wherein the composition comprises from 61 wt% to 75 wt% of the oil extender.

6. The thermoplastic gel of any of claims 1-5, wherein the composition comprises from 8 wt% to 17 wt% of the styrene triblock copolymer.

7. The thermoplastic gel of any of claims 1-6, wherein the composition comprises 7 wt% to 27 wt% of the styrene diblock copolymer.

8. The thermoplastic gel of any one of claims 1-7, wherein the oil extender is selected from a synthetic oil, a mineral oil, and any combination thereof.

9. The thermoplastic gel of any one of claims 1-8, wherein the composition further comprises an additive, optionally wherein the additive is selected from the group consisting of a mineral filler, process aid, anti-tack agent, stabilizer, and a pigment.

10. The thermoplastic gel of any one of claims 1-9, wherein
the styrene triblock copolymer is selected from poly(styrene-butadiene-styrene), poly(styrene-ethylene/butylene-styrene), poly(styrene-ethylene/propylene-styrene), poly(styrene-ethylene/ethylene-propylene-styrene), and any combination thereof; and
the styrene diblock copolymer is selected from poly(styrene-ethylene/propylene), poly(styrene-ethylene/butylene), and any combination thereof.

11. The thermoplastic gel of any one of claims 1-10, wherein the styrene triblock copolymer is selected from poly(styrene-ethylene/butylene-styrene), poly(styrene-ethylene/propylene-styrene), and any combination thereof, optionally wherein the styrene triblock copolymer is poly(styrene-ethylene/butylene-styrene).

12. The thermoplastic gel of any one of claims 1-11, wherein the styrene diblock copolymer is poly(styrene-ethylene/propylene).

13. The thermoplastic gel of claim 12, wherein the styrene triblock copolymer is poly(styrene-ethylene/butylene-styrene) and the styrene diblock copolymer is poly(styrene-ethylene/propylene), or wherein the styrene triblock copolymer is poly(styrene-ethylene/propylene-styrene) and the styrene diblock copolymer is poly(styrene-ethylene/propylene).

14. The thermoplastic gel of claim 13, wherein the composition comprises
12 to 16 wt% of the styrene triblock copolymer;
10 to 16 wt% of the styrene diblock copolymer; and
65 to 75 wt% of the oil extender.

15. A method of making the thermoplastic gel of any one of claims 1 to 14, comprising:
preparing a pre-swell comprising the styrene triblock copolymer, the styrene diblock copolymer, and the oil extender;
pumping the pre-swell into a mixer; and
melting and mixing the pre-swell in the mixer.

## Patentansprüche

1. Thermoplastisches Gel, hergestellt aus einer Zusammensetzung, die Folgendes umfasst:
ein Styroltriblockcopolymer;
ein Styroldiblockcopolymer; und
einen Ölextender,
wobei die Zusammensetzung mehr als 21 Gew.-% bis zu 35 Gew.-% einer Kombination aus dem Styroltriblockcopolymer und dem Styroldiblockcopolymer umfasst; ein Gewichtsverhältnis von dem Styroltriblockcopolymer zu dem Styroldiblockcopolymer 1:1,5 bis 1,5:1 beträgt; und das thermoplastische Gel eine Ölausschwitzung von weniger als 25 % nach 1500 Stunden bei 60 °C und 200 kPa, gemessen wie in der Spezifikation dargelegt, aufweist.

2. Thermoplastisches Gel nach Anspruch 1, wobei das Gewichtsverhältnis von dem Styroltriblockcopolymer zu dem Styroldiblockcopolymer 1:1,4 bis 1,4:1; 1:1,3 bis 1,3:1; 1:1,2 bis 1,2:1; oder 1:1 beträgt.

3. Thermoplastisches Gel nach Anspruch 1 oder 2, wobei das thermoplastische Gel eine Ölausschwitzung von weniger als 16 % nach 1500 Stunden bei 60 °C und 120 kPa; weniger als 20 % nach 1500 Stunden bei 60 °C und 200 kPa; oder weniger als 5 % nach 1500 Stunden bei 60 °C und 120 kPa aufweist.

4. Thermoplastisches Gel nach einem der Ansprüche 1-3, wobei die Zusammensetzung 25 Gew.-% bis 30 Gew.-% der Kombination aus dem Styroltriblockcopolymer und dem Styroldiblockcopolymer umfasst.

5. Thermoplastisches Gel nach einem der Ansprüche 1-4, wobei die Zusammensetzung 61 Gew.-% bis 75 Gew.-% des Ölextenders umfasst.

6. Thermoplastisches Gel nach einem der Ansprüche 1-5, wobei die Zusammensetzung 8 Gew.-% bis 17 Gew.-% des Styroltriblockcopolymers umfasst.

7. Thermoplastisches Gel nach einem der Ansprüche 1-6, wobei die Zusammensetzung 7 Gew.-% bis 27 Gew.-% des Styroldiblockcopolymers umfasst.

8. Thermoplastisches Gel nach einem der Ansprüche 1-7, wobei der Ölextender ausgewählt ist aus einem synthetischen Öl, einem Mineralöl und einer beliebigen Kombination davon.

9. Thermoplastisches Gel nach einem der Ansprüche 1-8, wobei die Zusammensetzung ferner ein Additiv umfasst, wobei das Additiv optional ausgewählt ist aus der Gruppe bestehend aus einem mineralischen Füllstoff, einem Verarbeitungshilfsmittel, einem Antihaftmittel, einem Stabilisator und einem Pigment.

10. Thermoplastisches Gel nach einem der Ansprüche 1-9, wobei
das Styroltriblockcopolymer ausgewählt ist aus Poly(styrolbutadien-styrol), Poly(styrol-ethylen/butylen-styrol), Poly(styrol-ethylen/propylen-styrol), Poly(styrol-ethylen/ethylen-propylen-styrol) und einer beliebigen Kombination davon; und
das Styroldiblockcopolymer ausgewählt ist aus Poly(styrol-ethylen/propylen), Poly(styrol-ethylen/butylen) und einer beliebigen Kombination davon.

11. Thermoplastisches Gel nach einem der Ansprüche 1-10, wobei das Styroltriblockcopolymer ausgewählt ist aus Poly(styrol-ethylen/butylen-styrol), Poly(styrol-ethylen/propylen-styrol) und einer beliebigen Kombination davon, wobei das Styroltriblockcopolymer optional Poly(styrol-ethylen/butylenstyrol) ist.

12. Thermoplastisches Gel nach einem der Ansprüche 1-11, wobei das Styroldiblockcopolymer Poly(styrol-ethylen/propylen) ist.

13. Thermoplastisches Gel nach Anspruch 12, wobei das Styroltriblockcopolymer Poly(styrol-ethylen/butylen-styrol) ist und das Styroldiblockcopolymer Poly(styrol-ethylen/propylen) ist, oder wobei das Styroltriblockcopolymer Poly(styrol-ethylen/propylen-styrol) ist und das Styroldiblockcopolymer Poly(styrol-ethylen/propylen) ist.

14. Thermoplastisches Gel nach Anspruch 13, wobei die Zusammensetzung Folgendes umfasst
12 bis 16 Gew.-% des Styroltriblockcopolymers;
10 bis 16 Gew.-% des Styroldiblockcopolymers; und
65 bis 75 Gew.-% des Ölextenders.

15. Verfahren zur Herstellung des thermoplastischen Gels nach einem der Ansprüche 1 bis 14, umfassend:
Herstellen einer Vorquellmasse, die das Styroltriblockcopolymer, das Styroldiblockcopolymer und den Ölextender umfasst;
Pumpen der Vorquellmasse in einen Mischer; und
Schmelzen und Mischen der Vorquellmasse in dem Mischer.

## Revendications

1. Gel thermoplastique préparé à partir d'une composition comprenant :
un copolymère tribloc de styrène ;
un copolymère dibloc de styrène ; et
un extendeur d'huile,
dans lequel la composition comprend plus de 21 % en poids jusqu'à 35 % en poids d'une combinaison du copolymère tribloc de styrène et du copolymère dibloc de styrène ; un rapport pondéral entre le copolymère tribloc de styrène et le copolymère dibloc de styrène de 1:1,5 à 1,5:1 ; et le gel thermoplastique a une exsudation d'huile inférieure à 25 % après 1500 heures à 60 °C et une pression de 200 kPa lorsqu'elle est mesurée telle qu'énoncée dans la spécification.

2. Gel thermoplastique selon la revendication 1, dans lequel un rapport pondéral entre le copolymère tribloc de styrène et le copolymère dibloc de styrène est de 1:1,4 à 1,4:1 ; de 1:1,3 à 1,3:1 ; de 1:1,2 à 1,2:1 ; ou 1:1.

3. Gel thermoplastique selon la revendication 1 ou 2, dans lequel le gel thermoplastique a une exsudation d'huile inférieure à 16 % après 1500 heures à 60 °C et 120 kPa ; inférieure à 20 % après 1500 heures à 60 °C et 200 kPa ; ou inférieure à 5 % après 1500 heures à 60 °C et 120 kPa.

4. Gel thermoplastique selon l'une quelconque des revendications 1 à 3, dans lequel la composition comprend de 25 % en poids à 30 % en poids de la combinaison du copolymère tribloc de styrène et du copolymère dibloc de styrène.

5. Gel thermoplastique selon l'une quelconque des revendications 1 à 4, dans lequel la composition comprend de 61 % en poids à 75 % en poids de l'extendeur d'huile.

6. Gel thermoplastique selon l'une quelconque des revendications 1 à 5, dans lequel la composition comprend de 8 % en poids à 17 % en poids du copolymère tribloc de styrène.

7. Gel thermoplastique selon l'une quelconque des revendications 1 à 6, dans lequel la composition comprend de 7 % en poids à 27 % en poids du copolymère dibloc de styrène.

8. Gel thermoplastique selon l'une quelconque des revendications 1 à 7, dans lequel l'extendeur d'huile est choisi parmi une huile synthétique, une huile minérale et toute combinaison de celles-ci.

9. Gel thermoplastique selon l'une quelconque des revendications 1 à 8, dans lequel la composition comprend en outre un additif, facultativement dans lequel l'additif est choisi dans le groupe constitué par une charge minérale, un adjuvant de traitement, un agent anti-collant, un stabilisant et un pigment.

10. Gel thermoplastique selon l'une quelconque des revendications 1 à 9, dans lequel
le copolymère tribloc de styrène est choisi parmi poly(styrène-butadiène-styrène), poly(styrène-éthylène/butylène-styrène), poly(styrène-éthylène/propylène-styrène), poly(styrène-éthylène/éthylène-propylène-styrène) et toute combinaison de ceux-ci ; et
le copolymère dibloc de styrène est choisi parmi poly(styrène-éthylène/propylène), poly(styrène-éthylène/butylène) et toute combinaison de ceux-ci.

11. Gel thermoplastique selon l'une quelconque des revendications 1 à 10, dans lequel le copolymère tribloc de styrène est choisi parmi poly(styrène-éthylène/butylène-styrène), poly(styrène-éthylène/propylène-styrène) et toute combinaison de ceux-ci, facultativement dans lequel le copolymère tribloc de styrène est poly(styrène-éthylène/butylène-styrène).

12. Gel thermoplastique selon l'une quelconque des revendications 1 à 11, dans lequel le copolymère dibloc de styrène est poly(styrène-éthylène/propylène) .

13. Gel thermoplastique selon la revendication 12, dans lequel le copolymère tribloc de styrène est poly(styrène-éthylène/butylène-styrène) et le copolymère dibloc de styrène est poly(styrène-éthylène/propylène), ou dans lequel le copolymère tribloc de styrène est poly(styrène-éthylène/propylène-styrène) et le copolymère dibloc de styrène est poly(styrène-éthylène/propylène).

14. Gel thermoplastique selon la revendication 13, dans lequel la composition comprend
12 à 16 % en poids du copolymère tribloc de styrène ;
10 à 16 % en poids du copolymère dibloc de styrène ; et
65 à 75 % en poids de l'extendeur d'huile.

15. Procédé de fabrication du gel thermoplastique selon l'une quelconque des revendications 1 à 14, comprenant :
la préparation d'un prégonflement comprenant le copolymère tribloc de styrène, le copolymère dibloc de styrène, et l'extendeur d'huile ;
le pompage du prégonflement dans un mélangeur ; et
la fusion et le mélange du prégonflement dans le mélangeur.
